# EUROPEAN PATENT SPECIFICATION

(11) **EP 3 273 073 B1**
(45) Date of publication and mention of the grant of the patent: **26.09.2018**
(21) Application number: 17174377.6
(22) Date of filing: 02.06.2017
(51) Int. Cl.: F16B 12/20

(54) **SPIRAL FASTENING DEVICE FOR FURNITURE PANELS**
SPIRAL VERBINDUNGSEINRICHTUNG FÜR MÖBELPLATTEN
DISPOSITIF D'ASSEMBLAGE EN SPIRALE POUR PANNEAUX DE MEUBLES

(30) Priority: 16.06.2016 ES 201630819
(43) Date of publication of application: 24.01.2018
(73) Proprietor: Industrias Auxiliares, S.A., 20808 Getaria (ES)
(72) Inventor: ARRILLAGA ALBENIZ, Ander, 20808 Getaria (Guipuzcoa) (ES)
(74) Representative: Boden, Keith McMurray

(56) References cited:
- EP-A1- 2 525 105
- ES-A1- 2 233 167
- FR-A- 1 467 282
- FR-A1- 2 307 942

## Description

### FIELD OF THE INVENTION

The present invention relates to a spiral fastening device for furniture panels, of the type that use in one of the panels a bolt with one or more annular heads and a spiral pulling member seated in the other panel.

### STATE OF THE PRIOR ART

At present and with reference to the state of the art, the use is known of spiral fastening devices for furniture panels, of the type that use in one of the panels a bolt with annular heads and a spiral pulling member seated in the other panel, said member comprising two discs which, in relation to their more or less deep location in the blind hole of the panels, are referred to as the inner disc and the outer disc, said discs being provided with spiral threads, which are frontally attached to each other with spacing means, and the head of the bolt comprising annular heads.

This same holder is the owner of Spanish Patent 2233167 filed on 03-03-2003.

These models present on the market have certain disadvantages. Firstly, there is the fact that being manufactured entirely from metal (normally zamak) to meet the necessary strength requirements makes it a heavy device; this is exacerbated by the fact that, in order to keep the assembly centred in relation to the panel, the discs must have different thicknesses, one of them being thinner and covering only the operational pulling need, and the other being thicker and serving as puller and eccentric spacer in the panel; this results in difficulty of manufacture and increased material and transport costs. Secondly, given that it is made up of two parts joined together by riveting, for the absorption of the transverse forces the connecting arbor must be made extremely robust in its shape and join, resulting in more material and greater weight.

FR-A-2307942 discloses a plastic rotating bolt for detachable furniture fittings, which consists of two connected discs with screwdriver access countersunk into one of the furniture fittings to be joined.

### EXPLANATION OF THE INVENTION AND ADVANTAGES

Faced with this state of affairs, the present invention relates to a spiral fastening device according to claim 1.

Thanks to this configuration, the pulling force is exerted on the metal material of the pressed discs since this requires greater strength, while the plastic casing fulfils multiple purposes: firstly it serves as an embracing band partially absorbing the transverse forces exerted on the polygonal connecting arbor (previously, the resistance of its material and the quality of the riveting were relied on to absorb the forces); furthermore, the casing provides the necessary positional offsetting of the discs, which can be reduced in thickness (in the case of the outer disc relative to the operational embedding); and in addition, the casing provides an extension of the bearing surface of the device in the hole in which it is seated. All of this allows the device as a whole to be made lighter with the use of plastic material for the casing. The discs, which are now made from pressed plate of reduced thickness, have sufficient strength to withstand the forces, thus lowering production and transport costs. These modifications result in a significant reduction in the weight of the assembly, with consequent benefits in terms of production and transport costs.

Another feature of the invention is that the plastic casing has on its interior face a number of robust offsetting ribs whose edge bears on the flat face of one of the pressed discs, and their prominence is such that it positions the assembly of pressed discs eccentrically relative to the median plane of the spiral pulling member.

This configuration facilitates the required offset positioning relative to the median plane of the assembly for its inclusion in the panel, in contrast to previous devices in which the outer disc was thicker in order to achieve this objective. Thus, the pressed discs have the same thickness, again reducing the use of materials and lowering costs. In addition, this configuration helps with the absorption of the transverse force exerted on the spiral pulling member when the panels are fastened together.

Another feature of the invention is that the plastic casing, internally on the sides of the receiving hole, has diametric ribs.

This configuration facilitates the centring of the head of the bolt in the receiving hole during the rotation of the two pressed discs joined together by the polygonal connecting arbor.

In the configuration of the interior wall of the plastic casing, a number of pairs of engaging prominences are provided.

This facilitates the positioning of the pressed discs and their subsequent guidance at the time of rotation relative to the plastic casing, providing double security for the coupling of the discs.

Another feature of the invention is that each pressed disc has a reference hole indicating the beginning of its respective spiral.

This configuration facilitates the assembly of the pressed discs with the beginnings of the two opposed spirals.

Finally, another feature of the invention is that the plastic casing incorporates a transverse indicator window that coincides with the respective reference holes for identifying the correct external and internal position of the plastic casing and the pressed discs.

This configuration makes it possible to view from the exterior the reference holes of the pressed discs for the correct positioning of the said discs, and the said transverse indicator window also serves as a guide for correctly positioning the spiral pulling member in the panel for receiving the head of the bolt.

### DRAWINGS AND REFERENCES

In order to provide a better understanding of the nature of the invention, the attached drawings show an industrial embodiment given purely by way of non-limitative example.

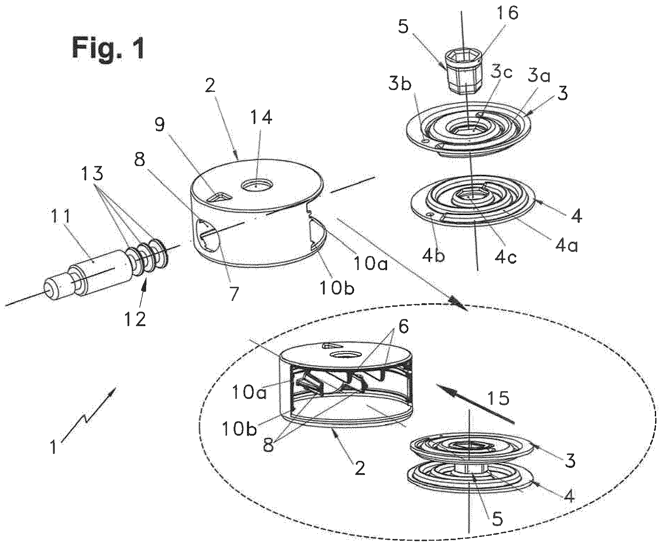

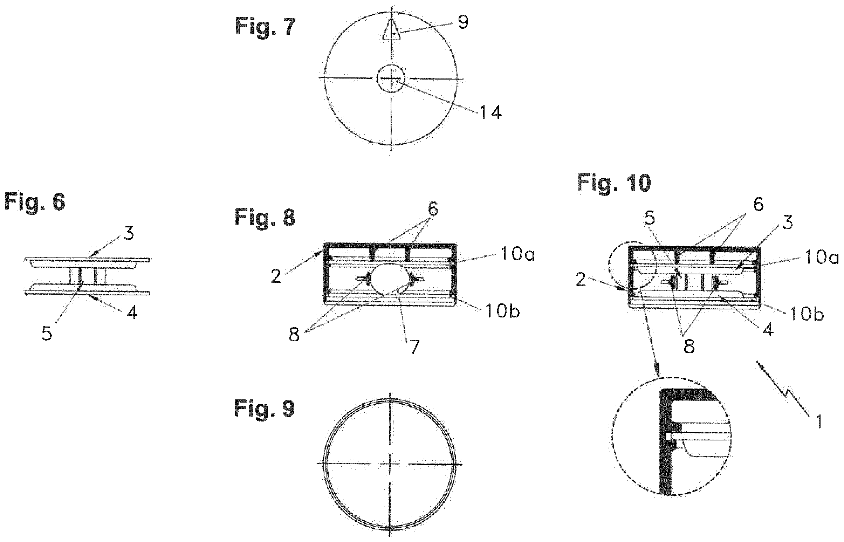

Figure 1 shows an exploded perspective view illustrating the composition of the advocated device, showing the assembly of the spiral pulling member (1) where the plastic casing (2) and the opposed pressed discs (3 and 4) can be seen in their mounted position with the polygonal connecting arbor (5) attached to them; a bolt (11) is located in relation to the said plastic casing (2). This figure incorporates a detail showing the internal configuration of the plastic casing (2), where can be seen the robust offsetting ribs (6), the diametric embracing ribs (8) and the housing prominences (10a and 10b) for housing the pressed discs (3 and 4), as well as a perspective view of the pressed discs (3 and 4) joined together by means of the polygonal connecting arbor (5) and fitted into the plastic casing by following the arrow showing the direction of engagement (15). In the detail, we have shaded the working profile in black to coincide with what is shown in Figures 8 and 10.

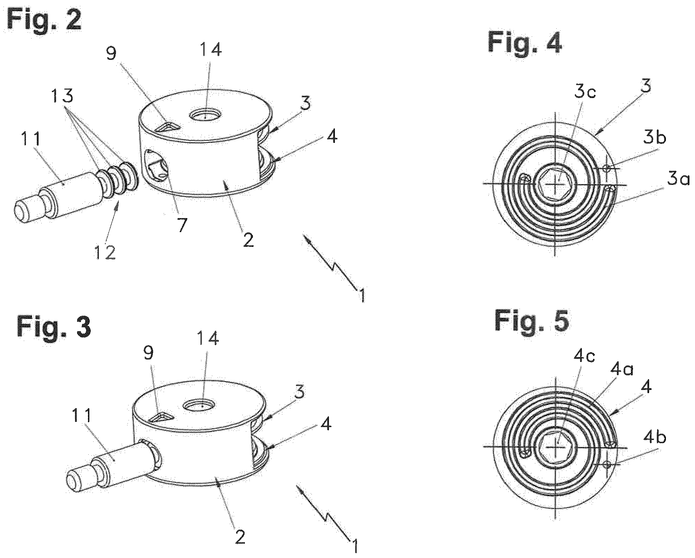

Figure 2 shows a perspective view of the assembly of the installed spiral pulling member (1) before the head (12) of the bolt (11) penetrates into the receiving hole (7) of the plastic casing (2), while Figure 3 shows the spiral pulling member (1) with the head (12) of the bolt (11) inside it, this being the moment when the two furniture panels are joined together.
Figures 4 and 5 are both views from the inside respectively of the clockwise pressed disc (3) and the anti-clockwise pressed disc (4); once fitted onto their polygonal connecting arbor (5), the two spirals (3a and 4a) are opposed and create the pulling member.
Figure 6 shows an elevation view of the pressed discs (3 and 4) coupled together by means of the polygonal connecting arbor (5).
Figures 7, 8 and 9 show views of the plastic casing (2), with the elevation view in Figure 8, the plan view from above in Figure 7 and the plan view from below in Figure 9. In the said plan view the interior of the plastic casing (2) can be seen, showing shaded in black the robust offsetting ribs (6), the diametric embracing ribs (8) and the housing prominences (10a and 10b).
Figure 10 shows a plan view of the spiral pulling member (1) in which can be seen the pressed discs (3 and 4) coupled together and fitted inside the plastic casing (2). The enlarged detail shows how each disc is embraced by the housing prominences (10a and 10b). Positionally in the drawing, Figures 6, 8 and 10 show the assembly unfitted and fitted.
   1.- Spiral pulling member.
   2.- Plastic casing.
   3.- Clockwise pressed disc.
      3a- Clockwise spiral (viewed from the opposed inner surface)
      3b- Reference hole
      3c- Polygonal hole
   4.- Anti-clockwise pressed disc
      4a- Anti-clockwise spiral (viewed from the opposed inner surface)
      4b- Reference hole
      4c- Polygonal hole
   5.- Polygonal connecting arbor
   6.- Robust offsetting ribs
   7.- Receiving hole
   8.- Diametric embracing ribs
   9.- Transverse indicator window.
   10a.- Housing prominence of clockwise pressed disc (3)
   10b.- Housing prominence of anti-clockwise pressed disc (4)
   11.- Bolt
   12.- Head of bolt (11)
   13.- Annular collars of bolt (11)
   14.- Actuating window of plastic casing (2)
   15.- Direction of coupling of pressed discs (3 and 4) in the plastic casing (2)
   16.- Projecting ridge of polygonal connecting arbor (5)

### EXPLANATION OF A PREFERRED EMBODIMENT

With reference to the drawings and references itemised above, the attached plans illustrate a preferred embodiment of the invention, relating to a spiral fastening device for furniture panels of the type that use in one of the panels a bolt (11) with annular heads (13) and a spiral pulling member (1) seated in the other panel, wherein the spiral pulling member (1) comprises a plastic casing (2) that encloses and positions within in its interior pressed discs (3 and 4) with respective clockwise (3a) and anti-clockwise (4a) spirals (when viewed from their opposed inner faces), said pressed discs (3 and 4) being opposed and joined together by a polygonal connecting arbor (5).

Figure 1 shows the assembly of the spiral pulling member (1), in which the components can be seen situated in the coupling position. Visible is the plastic casing (2) that will be housed in the blind hole provided in one of the furniture panels. Inside the said casing (2) will be fitted the pressed discs (3 and 4), joined from the upper part by means of the polygonal connecting arbor (5), which butts up against the clockwise pressed disc (3) (viewed from its opposed inner face) due to the projecting ridge (16). Once the pressed discs (3 and 4) have been fitted by following the arrow showing the direction of engagement (15) in the detail of Figure 1, they are inserted into the plastic casing (2) in order to be subjected to the pulling force exerted by the bolt (11) situated in the other furniture panel; this force, generated by the application of a rotational movement on the polygonal connecting arbor (5) through the actuating window (14), will draw the two panels together. This action can be observed more clearly in Figure 2, which shows the approach of the bolt (11) towards the spiral pulling member (1), and in Figure 3, which shows a perspective view of the spiral pulling member (1) with the bolt (11) inside it; this represents the final stage of the action to draw the two furniture panels together.

The detail of Figure 1 also shows a perspective view of the interior of the plastic casing (2), in which the robust offsetting ribs can be seen (6), also viewed in elevation in Figure 8, which impart the necessary eccentricity to the assembly of the spiral pulling member (1) relative to its median plane. These robust offsetting ribs (6) will bear against the upper surface of the clockwise pressed disc (3) (viewed from its opposed inner face); this allows the discs to be of the same thickness, and thus reduces the use of materials and lowers costs. In addition, this configuration helps with the absorption of the transverse force exerted on the spiral pulling member (1) when the panels are fastened together.

The detail of Figure 1 shows the diametric embracing ribs (8), also viewed in elevation in Figures 8 and 10; these help to keep the head (12) of the bolt (11) centred in the receiving hole (7) during the rotation of the assembly of the two pressed discs (3 and 4) joined together by the polygonal connecting arbor (5).

In the detail of Figure 1, and shown more clearly in the elevation view of Figure 8, can be seen the housing prominences (10a and 10b), which serve as a guide for the pressed discs (3 and 4) both at the time of their insertion into the plastic casing (2) and when the pressed discs (3 and 4) are rotated during the action of drawing the two furniture panels together.

Figure 4 shows a plan view of the interior of the clockwise pressed disc (3), and Figure 5 a plan view of the interior of the anti-clockwise pressed disc (4) (both viewed from their opposed inner faces), in which can be seen the reference holes (3b and 4b) whose purpose is to facilitate correct fitting by indicating the beginnings of the opposed spirals (3a and 4a). Correct positioning of these reference holes (3b and 4b) is achieved by looking through the transverse indicator window (9), shown in the plan view from above of Figure 7, which also serves as a guide for correctly positioning the spiral pulling member (1) in the blind hole of the furniture panel.

## Claims

1. Spiral fastening device for furniture panels of the type that use in one of the panels a bolt (11) with one or more annular heads (13) and a spiral pulling member (1) seated in the other panel, the spiral pulling member (1) comprising a plastic casing (2) **characterized in that** the plastic casing (2) encloses and positions within its interior pressed discs (3, 4) with respective clockwise (3a) and anti-clockwise (4a) spirals when viewed from their opposed inner faces, said pressed discs (3, 4) being opposed and joined together by a polygonal connecting arbor (5) and fitted into the plastic casing (2).

2. Spiral fastening device for furniture panels according to claim 1, **characterised in that** the plastic casing (2) has on its interior face a number of robust offsetting ribs (6) whose edge bears on the flat face of one of the pressed discs (3, 4), and their prominence is such that it positions the assembly of pressed discs (3, 4) eccentrically relative to the median plane of the spiral pulling member (1).

3. Spiral fastening device for furniture panels according to the preceding claims, **characterised in that** the plastic casing (2), internally on the sides of the receiving hole (7), has diametric embracing ribs (8).

4. Spiral fastening device for furniture panels according to the preceding claims, **characterised in that** the interior wall of the plastic casing (2) is provided with housing prominences (10a, 10b).

5. Spiral fastening device for furniture panels according to the preceding claims, **characterised in that** each pressed disc (3 and 4) has a reference hole (3b, 4b) indicating the beginning of its respective spiral (3a, 4a).

6. Spiral fastening device for furniture panels according to the preceding claims, **characterised in that** the plastic casing (2) incorporates a transverse indicator window (9) that coincides with the respective reference holes (3b, 4b) for identifying the correct external and internal position of the plastic casing (2) and the pressed discs (3, 4).

## Patentansprüche

1. Spiralförmige Befestigungsvorrichtung für Möbelplatten des Typs, die einen Bolzen (11) mit einem oder mehreren ringförmigen Köpfen (13) in einer der Platten verwenden und ein spiralförmiges Zugelement (1), das in der anderen Platte sitzt, wobei das spiralförmige Zugelement (1) ein Kunststoffgehäuse (2) umfasst,
**dadurch gekennzeichnet, dass**
das Kunststoffgehäuse (2) in seinem Inneren gepresste Scheiben (3, 4) mit jeweiligen, wenn von deren entgegengesetzten inneren Flächen gesehen, im Uhrzeigersinn (3a) und gegen den Uhrzeigersinn (4a) ausgebildete Spiralen einschließt und positioniert, wobei die gepressten Scheiben (3,4) einander entgegengesetzt und durch eine polygonale Verbindungsachse (5) miteinander verbunden und in das Kunststoffgehäuse (2) eingepasst sind.

2. Spiralförmige Befestigungsvorrichtung für Möbelplatten nach Anspruch 1,
**dadurch gekennzeichnet, dass**
das Kunststoffgehäuse (2) auf seiner Innenfläche eine Anzahl an robusten Versetzungsrippen (6) aufweist, deren Rand auf der flachen Fläche einer der gepressten Scheiben (3, 4) anliegt und deren Erhebung derart ist, dass diese die Anordnung der gepressten Scheiben (3, 4) relativ zu der Mittelebene des spiralförmigen Zugelements (1) exzentrisch positioniert.

3. Spiralförmige Befestigungsvorrichtung für Möbelplatten nach den vorhergehenden Ansprüchen,
**dadurch gekennzeichnet, dass**
das Kunststoffgehäuse (2) diametrische Umfassungsrippen (8) intern auf den Seiten des Aufnahmelochs (7) aufweist.

4. Spiralförmige Befestigungsvorrichtung für Möbelplatten nach den vorhergehenden Ansprüchen,
**dadurch gekennzeichnet, dass**
die Innenwand des Kunststoffgehäuses (2) mit Gehäuseerhebungen (10a, 10b) ausgestattet ist.

5. Spiralförmige Befestigungsvorrichtung für Möbelplatten nach den vorhergehenden Ansprüchen,
**dadurch gekennzeichnet, dass**
jede gepresste Scheibe (3 und 4) ein Bezugsloch (3b, 4b) aufweist, das den Anfang deren jeweiliger Spirale (3a, 4a) anzeigt.

6. Spiralförmige Befestigungsvorrichtung für Möbelplatten nach den vorhergehenden Ansprüchen,
**dadurch gekennzeichnet, dass**
das Kunststoffgehäuse (2) ein transversales Anzeigefenster (9) aufweist, das mit den jeweiligen Bezugslöchern (3b, 4b) zum Identifizieren der korrekten äußeren und inneren Position des Kunststoffgehäuses (2) und der gepressten Scheiben (3, 4) übereinstimmt.

## Revendications

1. Dispositif de fixation en spirale pour panneaux de meuble du type qui utilise, dans l'un des panneaux, un boulon (11) avec une ou plusieurs têtes annulaires (13) et un élément de traction en spirale (1) installé dans l'autre panneau, l'élément de traction en spirale (1) comprenant une enveloppe en plastique (2),
**caractérisé en ce que** l'enveloppe en plastique (2) enferme et positionne, dans son intérieur, des disques comprimés (3, 4) avec des spirales dans le sens des aiguilles d'une montre (3a) et dans le sens inverse des aiguilles d'une montre (4a) respectives, lorsqu'elles sont observées depuis leurs faces internes opposées, lesdits disques comprimés (3, 4) étant opposés et assemblés par un arbre de raccordement polygonal (5) et montés dans l'enveloppe en plastique (2).

2. Dispositif de fixation en spirale pour panneaux de meuble selon la revendication 1, **caractérisé en ce que** l'enveloppe en plastique (2) a, sur sa face intérieure, un certain nombre de nervures de décalage robustes (6) dont le bord appuie sur la face plate de l'un des disques comprimés (3, 4), et leur proéminence est telle qu'elle positionne l'ensemble de disques comprimés (3, 4) de manière excentrique par rapport au plan médian de l'élément de traction en spirale (1).

3. Dispositif de fixation en spirale pour panneaux de meuble selon les revendications précédentes, **caractérisé en ce que** l'enveloppe en plastique (2), à l'intérieur des côtés du trou de réception (7), a des nervures diamétrales englobantes (8) .

4. Dispositif de fixation en spirale pour panneaux de meuble selon les revendications précédentes, **caractérisé en ce que** la paroi intérieure de l'enveloppe en plastique (2) est prévue avec des proéminences de logement (10a, 10b).

5. Dispositif de fixation en spirale pour panneaux de meuble selon les revendications précédentes, **caractérisé en ce que** chaque disque comprimé (3 et 4) a un trou de référence (3b, 4b) indiquant le début de sa spirale (3a, 4a) respective.

6. Dispositif de fixation en spirale pour panneaux de meuble selon les revendications précédentes, **caractérisé en ce que** l'enveloppe en plastique (2) comprend une fenêtre d'indication transversale (9) qui coïncide avec les trous de référence (3b, 4b) respectif pour identifier les positions externe et interne correctes de l'enveloppe en plastique (2) et des disques comprimés (3, 4).
